**Europäisches Patentamt**

**European Patent Office**

**Office européen des brevets**

(11) Publication number: **0 110 618**
**B1**

# EUROPEAN PATENT SPECIFICATION

(45) Date of publication of patent specification: **06.05.87**

(51) Int. Cl.⁴: **A 21 B 1/26**

(21) Application number: **83306980.0**

(22) Date of filing: **15.11.83**

(54) Static rack oven.

(30) Priority: **15.11.82 GB 8232598**

(43) Date of publication of application:
**13.06.84 Bulletin 84/24**

(45) Publication of the grant of the patent:
**06.05.87 Bulletin 87/19**

(84) Designated Contracting States:
**AT BE CH DE FR GB IT LI LU NL SE**

(56) References cited:
**DE-A-1 432 928
DE-A-2 422 186
FR-A-2 415 963
GB-A-1 530 361**

(73) Proprietor: **DOUBLE D BAKERY ENGINEERING LTD.**
**East Mains Industrial Estate**
**Broxburn West Lothian Scotland EH52 5AU (GB)**

(72) Inventor: **Anderson, William James**
**11 Parklands**
**Broxburn Scotland (GB)**
Inventor: **Philip, Robert Nicol**
**30 Carrick Knowe Road**
**Edinburgh Scotland (GB)**
Inventor: **Jackson, Douglas**
**20 Dick Place**
**Edinburgh Scotland (GB)**
Inventor: **Russel, James Robeson Hutchison**
**54 Steeple Crescent**
**Dalgety Bay West Fife Scotland (GB)**

(74) Representative: **Carpmael, John William Maurice et al**
**CARPMAELS & RANSFORD**
**43 Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a static rack oven, that is, an oven in which the rack of goods to be baked, once placed in the oven, does not move.

All ovens, whether commercial or domestic, suffer from the same problem, that is, that it is extremely difficult to achieve a uniform standard of bake over an entire rack of goods. This is the result of two effects. First, due to the fundamental fact that hot air rises, goods lying at the top of an oven tend to bake considerably faster than those lying at the bottom. Second, due to the reflection of heat from the sides of the oven, goods lying at the edge of a baking tray tend to bake faster than those lying in the middle, although this effect is much less apparent than the first effect.

In a domestic oven possessing, typically, three shelves, these problems can largely be overcome by manually rotating the baking trays and exchanging the top and bottom trays after half the estimated baking time has elapsed. This operation can be accomplished in less than 15 seconds and thus the goods should not be detrimentally affected by the opening of the oven door.

However, when baking on a commercial scale, the baking trays are of a much larger size and a baking rack will probably possess about sixteen tray stations, depending on the size and type of goods to be baked. Thus to perform the above-described method of rotating and exchanging individual baking trays, the entire rack of goods would have to be removed from the oven for a considerable length of time, which would almost certainly have a detrimental effect on the quality of goods being baked. It would also take a considerable time to carry out the operation.

To avoid this removal of the rack from the oven with its inevitable consequences, various bakery ovens have been produced which incorporate a device for automatically rotating the rack within the oven chamber. For instance, ovens are known which include a rotary turntable in the oven chamber on which racks of goods may be loaded. Alternatively, some ovens possess a "carousel" which rotates about a central vertical axis and has a number of individual stations to accommodate a rack of goods. However, both these devices must be driven by a motor and controlled by an extensive system of gears and bearings, all of which require maintenance which can prove costly. Furthermore, since the racks are rotated within the oven chamber, the oven must be larger in size than a static rack oven and hence takes up more space in a bakery. Such ovens are also extremely expensive.

Another alternative is provided by the tunnel oven. This consists of an oven chamber which is shaped like a tunnel and a conveyor belt which passes through the tunnel. The racks of goods are loaded onto the conveyor belt, pass through the oven chamber and are removed at the other end of the tunnel after baking. As in the case of ovens incorporating rotary turntables or carousels, a motor and system of gears, bearings, etc. is required to drive the conveyor belt and all this machinery is expensive and requires costly maintenance. A tunnel oven also occupies a considerable amount of space in a bakery.

It has been proposed in GB—A—1530361 to provide an oven which has an oven chamber in which there are supports for two columns of baking trays, there being a space between the two columns and at the sides of each column. Heating elements are located in these spaces and an air circulating means, which is designed to draw air out of the oven chamber through the space between the two columns is located at the top of the oven. A number of slits are located in opposed side walls of each column through which hot air may pass. In operation, hot air passes down through the spaces at the sides of each column, passes through the adjacent slits and is drawn by the air circulating means over the goods to be baked, out of the centremost slits into the central space between the columns and up to the roof of the oven chamber for recirculation. However, this uni-directional pattern of air flow over the goods to be baked does not achieve an even bake as the temperature of the air drops as it passes from the outermost side of the baking tray to the central space and therefore the goods which lie closest to the central space are not baked as quickly as the goods closest to the sides of the oven chamber.

It is thus an object of the present invention to obviate these problems by providing a bakery oven which is compact, economical to manufacture and operate and achieves a uniform standard of bake over an entire rack of goods.

DE—A—2422186 discloses a static rack oven comprising an oven chamber for receiving a rack of goods and a hot air heating system in which the heated air flows into the oven chamber through fixed openings in two opposing sides of the oven chamber and is extracted from the oven chamber via two suction chambers located in the front and rear walls of the oven chamber, i.e. those walls which do not contain hot air supply openings.

FR—A—2415963 discloses a multideck oven which has the facility to receive additional baking plates when the oven is to be used for baking small articles. In two embodiments, the oven is provided with means for transmitting heat to the baking plates, including any additional plates, in the form of apertures located so as to direct hot air onto the lower face of each plate in the oven. The apertures associated with the stations for additional plates are equipped with sliding shutters or pivotal flaps so that these apertures may be closed in the absence of additional plates or opened if additional plates are present.

According to the invention there is provided a bakery oven comprising a heating chamber bounded by generally vertical walls, a plurality of hot air supply apertures situated in two opposing walls and a fan for circulating air in the oven wherein the hot air is distributed through the hot air supply apertures, flows over and around goods to be baked on shelves of a rack, and is returned for recirculation via those walls which do not contain hot air supply apertures, characterised in that the opening of the hot air supply apertures is individually set for each shelf of the rack.

It is preferred that the fan is mounted in the roof of the oven and that the hot air, after flowing over and around the goods to be baked, returns to the roof of the oven for recirculation. It is also preferred that the fan is a backward curved bladed fan which operates at a constant speed, since this type of fan distributes the air more evenly and hence more effectively than other types, without the need for a scroll.

The hot air supply apertures are adjustable and preferably consist of horizontal slots of adjustable opening. The opening of each slot can be individually set. The horizontal slots may be bounded by upper and lower flanges, the upper flanges being vertically adjustable to allow the opening of the slots to be varied.

The air may be heated by electric elements or by a heat exchanger fired by gas or oil. When electric elements are used as the heat source, it is preferred that the electric elements are situated within the walls containing the hot air supply apertures and are distributed over the full length of the walls. In practice the bottom element may not be required since the air reaching the lower slots will have passed over all the elements above and will therefore be hottest.

A preferred embodiment of the invention is now described by way of example with reference to the accompanying schematic drawings, in which:—

Figure 1 is a sectional front elevation of an oven according to the invention.

Figure 2 is a section on the line 2—2 of Figure 1, showing the position of the door, and

Figure 3 is a diagrammatic section in plan on the line 3—3 of Figure 1 showing the direction of air flow.

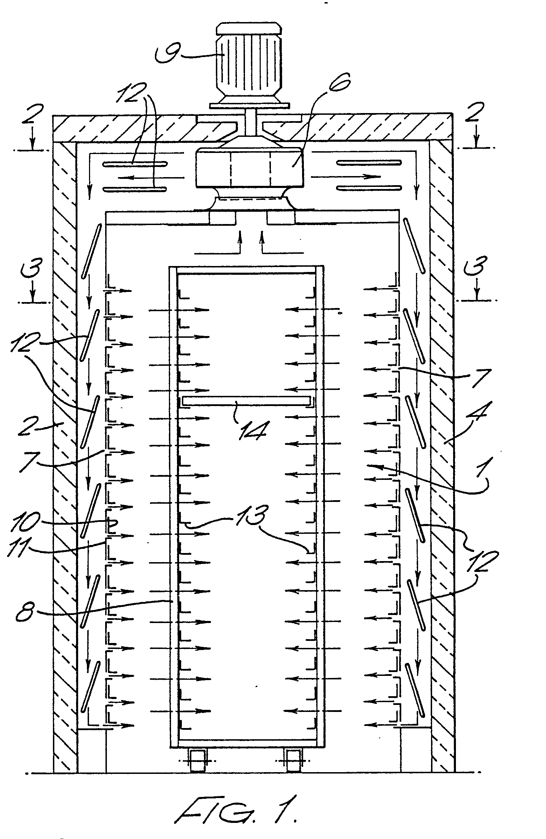

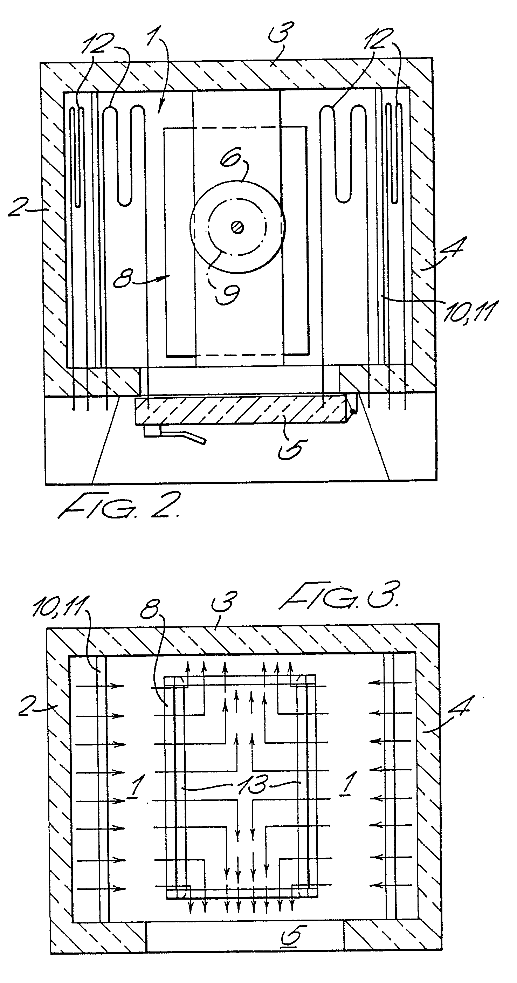

Referring to the drawings, Figs. 1 and 2 show an oven chamber 1 bounded by three vertical walls 2, 3, 4, the fourth end wall being formed by the door 5. A fan 6 is mounted in the roof of the oven to distribute the hot air through the hot air supply apertures 7 and over and around the rack 8 of goods to be baked. The fan is a backward curved bladed fan since it has been found that this type of fan distributes the hot air more evenly and hence more effectively than other types without the need for a scroll. The fan is driven by a motor 9 which is positioned on the roof of the oven but outside the oven chamber 1. A small auxiliary fan is mounted above the blades of the main fan to prevent the motor from overheating as a result of heat from the oven chamber being conducted along the fan drive shaft to the motor.

The hot air supply apertures, which consist of horizontal slots bounded by upper and lower flanges 10 and 11 respectively, are located in the two opposing side walls 2, 4 and are aligned in direct opposition to one another. The upper flanges 10 can be adjusted vertically to alter the opening of the slot and thereby regulate the air flow. Each slot can be individually adjusted although slots are normally set so as to achieve an even result for goods which are difficult to bake because of a high sugar or fat content, e.g. Scotch Rolls. Once the precise settings have been determined for a particular oven, all goods should bake evenly. However, the fact that the slots are adjustable allows the operator to compensate for any variations which may occur in use or to achieve any special standard which may be stipulated by individual customers.

The air is heated by passing over electric elements 12 which are located within the side walls 2, 4. These elements 12 are distributed over the full length of the walls 2, 4, so that the air supply passes over an electric element 12 immediately prior to passing through an aperture 7 into the oven chamber 1.

In operation, a loaded baking rack 8 is wheeled into the oven chamber and the air supply apertures are adjusted so that the air is directed above and below each station 13 in the rack. It should be noted that the rack then remains static until the baking operation is complete. The openings of the apertures 7 are graduated to compensate for the fact that heat rises. Thus the apertures 7 lying near the top of the oven are adjusted so that they have smaller openings than those lying near the bottom. The optimum slot openings for a typical oven have been found to lie in the ranges specified in the table below. The slots have been numbered from bottom to top.

| Number | Minimum opening | Maximum opening |
| --- | --- | --- |
| 1—5 | 3 mm | 6 mm |
| 6—9 | 2 mm | 5 mm |
| 10—12 | 1 mm | 4 mm |
| 13—16 | closed | 3 mm |

It is also important that the sides of the baking rack 8 should not be too close or too far from the hot air supply apertures 7. If they lie too close then the goods at the edges of the trays 14 will tend to burn whereas if they lie too far away then the goods in the middle of the trays 14 will not be adequately cooked. For a typical baking rack in which the trays 14 are 76 cm by 46 cm, the distance between the edge of the trays 14 and the hot air supply apertures should be in the range of 15 cm to 40 cm.

A particularly important feature of the oven is the pattern of hot air distribution as shown by the arrows in Figures 1 and 3.

As previously mentioned, goods lying at the sides of a tray 14 tend to bake faster than those lying in the middle. However, since the hot air supply apertures 7 in the oven are located in the two opposing side walls 2, 4, two separate opposing airflows are set up which pass over and around the goods and meet at the middle of the baking trays 14. It is believed that there is thus a greater density of hot air at the middle of the trays 14 which compensates for the fact that the air itself is slightly cooler than when it left the supply apertures 7. After the two airflows have combined, the air passes out of the ends of the rack 8 and returns to the roof of the oven ready for recirculation via the end wall 3 and door 5.

Thus, by adjusting the air supply apertures 7 as described above, this highly efficient air flow system enables a uniform standard of bake to be achieved over an entire rack of goods without the need to turn round the rack after it has been placed in the oven.

Although the preferred embodiment of this invention specifies that the fan be mounted in the roof of the oven, it should be appreciated that a similar bi-directional air flow over the goods to be baked could be achieved by placing the fan in any part of the oven. For instance, the fan could be located in a recess in the floor of the oven. It is important though that the appropriate type of fan be selected according to the position in the oven where the fan is to be located.

## Claims

1. A bakery oven comprising a heating chamber (1) bounded by generally vertical walls (2, 3, 4, 5), a plurality of hot air supply apertures (7) situated in two opposing walls (2, 4) and a fan (6) for circulating air in the oven wherein the hot air is distributed through the hot air supply apertures (7), flows over and around goods to be baked on shelves of a rack (8), and is returned for recirculation via those walls (3, 5) which do not contain hot air supply apertures (7), characterised in that the opening of the hot air supply apertures (7) is individually set for each shelf of the rack (8).

2. A bakery oven according to claim 1 characterised in that the fan (6) is mounted in the roof of the oven and the hot air, after flowing over and around the goods to be baked, returns to the roof of the oven for recirculation.

3. A bakery oven according to claim 1 or claim 2 characterised in that the fan (6) is a backward curved bladed fan.

4. A bakery oven according to any preceding claim characterised in that the hot air supply apertures (7) are adjustable.

5. A bakery oven according to any preceding claim characterised in that the hot air supply apertures (7) consist of horizontal slots of adjustable opening.

6. A bakery oven according to claim 5 characterised in that horizontal slots are bounded by upper and lower flanges (10, 11), the upper flanges (10) being vertically adjustable to allow the opening of the slots to be varied.

7. A bakery oven according to any preceding claim characterised in that the air is heated by electric elements (12).

8. A bakery oven according to claim 7 characterised in that electric elements (12) are situated within the walls (2, 4) containing the hot air supply apertures (7) and are distributed over at least substantially the full length of the walls.

9. A bakery oven according to any one of claims 1—6 characterised in that the air is heated by a heat exchanger fired by gas or oil.

## Patentansprüche

1. Backofen mit einer Heizkammer (1), die von im allgemeinen senkrechten Wänden (2, 3, 4, 5) begrenzt ist, mit einer Vielzahl von Heißluft-Zuführöffnungen (7), die in zwei gegenüberliegenden Wänden (2, 4) angeordnet sind, sowie mit einem Gebläse (6), um Luft im Ofen zirkulieren zu lassen, wobei die Heißluft durch die Heißluft-Zuführöffnungen (7) verteilt wird, über und um das Backgut auf den Fächern eines Regals (8) strömt und für einen neuen Umlauf über jene Wände (3, 5) zurückgeführt wird, die keine Heißluft-Zuführöffnungen (7) enthalten, dadurch gekennzeichnet, daß der Auslaß für die Heißluft-Zuführöffnungen (7) für jedes Fach auf dem Regal (8) einzeln eingestellt wird.

2. Backofen gemäß Anspruch 1, dadurch gekennzeichnet, daß das Gebläse (6) im Dach des Backofens befestigt ist und die Heißluft, nachdem sie über und um das Backgut geströmt ist, zum Dach des Backofens zurückkehrt, um wieder in Umlauf versetzt zu werden.

3. Backofen gemäß Anspruch 1 oder 2, dadurch gekennzeichnet, daß das Gebläse (6) ein Gebläse mit nach hinten gekrümmten Blättern ist.

4. Backofen gemäß jedem der bisherigen Ansprüche, dadurch gekennzeichnet, daß die Heißluft-Zuführöffnungen (7) einstellbar sind.

5. Backofen gemäß jedem der bisherigen Ansprüche, dadurch gekennzeichnet, daß die Heißluft-Zuführöffnungen (7) aus horizontalen Schlitzen eines einstellbaren Auslasses bestehen.

6. Backofen gemäß Anspruch 5, dadurch gekennzeichnet, daß die horizontalen Schlitze von oberen und unteren Flanschen (10, 11) begrenzt werden, wobei die oberen Flansche (10) vertikal einstellbar sind, um den Auslaß der Schlitze verändern zu können.

7. Backofen gemäß jedem der bisherigen Ansprüche, dadurch gekennzeichnet, daß die Luft mit elektrischen Heizelementen (12) erhitzt wird.

8. Backofen gemäß Anspruch 7, dadurch gekennzeichnet, daß die elektrischen Heizelemente (12) innerhalb jener Wände (2, 4) angeordnet sind, die die Heißluft-Zuführöffnungen (7) enthalten, und über zumindest im wesentlichen die gesamte Länge verteilt sind.

9. Backofen gemäß jedem der Ansprüche 1 bis 6, dadurch gekennzeichnet, daß die Luft mit einem Wärmetauscher erhitzt wird, der mit Gas oder Öl befeuert wird.

## Revendications

1. Four de boulangerie comportant une chambre de chauffe (1) délimitée par des parois (2, 3, 4, 5) qui d'une manière générale sont verticales, une pluralité d'ouvertures d'alimentation d'air chaud (7) situées dans deux parois opposées (2, 4) et un ventilateur (6) servant à faire circuler l'air dans le four, et dans lequel l'air chaud est réparti entre les ouvertures d'alimentation d'air chaud (7), circule sur et autour des denrées devant être cuites, qui sont disposées sur les tablettes d'un râtelier (8), et est renvoyé en recirculation par les parois (3, 5) qui ne comportent pas d'ouverture d'alimentation d'air chaud (7), caractérisé en ce que la taille des ouvertures d'alimentation d'air chaud (7) est réglée individuellement pour chaque tablette du râtelier (8).

2. Four de boulangerie selon la revendication 1, caractérisé en ce que le ventilateur (6) est monté dans le plafond du four, et l'air chaud, après avoir circulé sur et autour des denrées devant être cuites, revient au plafond du four pour être mis en recirculation.

3. Four de boulangerie selon la revendication 1 ou 2, caractérisé en ce que le ventilateur (6) est une ventilateur à pales incurvées vers l'arrière.

4. Four de boulangerie selon l'une quelconque des revendications précédentes, caractérisé en ce que les ouvertures d'alimentation d'air chaud (7) sont réglables.

5. Four de boulangerie selon l'une quelconque des revendications précédentes, caractérisé en ce que les ouvertures d'alimentation d'air chaud (7) sont constituées par des fentes horizontales à ouverture réglable.

6. Four de boulangerie selon la revendication 5, caractérisé en ce que des fentes horizontales sont limitées par des flasques supérieurs et inférieurs (10, 11), les flasques supérieurs (10) étant réglables verticalement de manière à permettre une modification de l'ouverture des fentes.

7. Four de boulangerie selon l'une quelconque des revendications précédentes, caractérisé en ce que l'air est chauffé par des organes électriques (12).

8. Four de boulangerie selon la revendication 7, caractérisé en ce que les organes électriques (12) sont situés à l'intérieur des parois (2, 4) contenant les ouvertures d'alimentation d'air chaud (7) et sont réparties au moins essentiellement sur toute la longueur des parois.

9. Four de boulangerie selon l'une quelconque des revendications 1—6, caractérisé en ce que l'air est chauffé par un échangeur de chaleur chauffé au gaz ou au mazout.

FIG. 1.

FIG. 2.

FIG. 3.